# EUROPEAN PATENT APPLICATION

(11) **EP 4 835 436 A1**
(43) Date of publication of application: **04.11.2026**
(21) Application number: 25173251.7
(22) Date of filing: 29.04.2025
(51) Int. Cl.: G01N 11/00

(54) **DETERMINING PROPERTIES OF A FLUID MEDIUM TRANSPORTED BY A PUMP**

(71) Applicant: Alfa Laval Corporate AB, 221 00 Lund (SE)
(72) Inventor: DAUGAARD, Poul Anton, 6000 KOLDING (DK); RAABJERG JENSEN, Jesper, 6000 KOLDING (DK); REHHOFF, Kenneth, 6000 KOLDING (DK)
(74) Representative: Alfa Laval Attorneys

(57) **Abstract**

The present disclosure relates to a method of a device (13) of determining properties of a fluid medium transported by a pump (2), and a device (13) performing the method.

The method provided in an aspect comprises acquiring (S101) data indicating power (P) supplied to a motor (3) driving the pump (2) and frequency (f) of the supplied power, determining (S102) to which one of a plurality of predefined power and frequency segments the acquired power and frequency data corresponds, wherein each segment is pre-associated with specific fluid properties, and determining (S103) the properties of the fluid medium based on the pre-associated fluid properties of the segment to which the acquired power and frequency data corresponds.

## Description

### TECHNICAL FIELD

The present disclosure relates to a method of a device for determining properties of a fluid medium transported by a pump, and a device performing the method.

### BACKGROUND

Pumps are widely used in process systems to transport various fluid media, such as milk, oil, chemicals, and other process liquids. Properties of the fluid being pumped have a significant impact on key pump performance parameters, including flow rate and pressure (commonly referred to as head) exerted by the pump on the transported fluid.

Because fluid properties such as viscosity, density, and flow behaviour directly influence pump performance, it is important to identify the specific fluid being transported. However, most process systems are not equipped with sensors capable of measuring fluid properties like specific gravity or viscosity, making it challenging to accurately determine pump performance parameters.

Even when such sensors are present, the accuracy of sensors measuring pump performance parameters is influenced by the properties of the fluid. While these sensors are typically calibrated based on the fluid being water, or, if not calibrated may provide readings with minor deviations under standard conditions. However, when the transported fluid differs significantly from water, the readings may not merely be imprecise but incorrect, as the sensor outputs no longer reflect the actual physical behaviour of the system. This can lead to inaccuracies in performance assessments and process control.

This presents a challenge in accurately assessing pump performance and ensuring accurate system operation,

### SUMMARY

One objective is to solve, or at least mitigate, this problem in the art and thus to provide an improved method of determining properties of a fluid medium transported by a pump.

This objective is attained in a first aspect by a method of a device for determining properties of a fluid medium transported by a pump, the method comprising acquiring data indicating power supplied to a motor driving the pump and frequency of the supplied power; determining to which one of a plurality of predefined power and frequency segments the acquired power and frequency data corresponds, wherein each segment is pre-associated with specific fluid properties; and determining the properties of the fluid medium based on the pre-associated fluid properties of the segment to which the acquired power and frequency data corresponds.

This objective is attained in a second aspect by a device configured to determine properties of a fluid medium transported by a pump, the device being operative to acquire data indicating power supplied to a motor driving the pump and frequency of the supplied power; to determine to which one of a plurality of predefined power and frequency segments the acquired power and frequency data corresponds, wherein each segment is pre-associated with specific fluid properties; and to determine the properties of the fluid medium based on the pre-associated fluid properties of the segment to which the acquired power and frequency data corresponds.

Advantageously, this approach enables identification of fluid properties such as viscosity and/or specific gravity or the fluid type without requiring dedicated fluid sensors.

In an embodiment, the acquired power and frequency data is considered to correspond to a predefined segment if a ratio between a number of acquired data values falling within power and frequency boundaries defining the segment and a total number of acquired data values is sufficiently high. This embodiment allows the system to tolerate occasional deviations or noise in the data while still confidently identifying the fluid being transported.

In an embodiment, the ratio is considered to be sufficiently high if it exceeds a set threshold value. This embodiment provides a quantifiable and configurable condition for fluid classification, enabling flexible adaptation to different process environments.

In an embodiment, the threshold value is dynamically adjustable based on historical operational data or real-time measurements. This embodiment enables the system to automatically adjust sensitivity to varying operating conditions, improving robustness and classification accuracy.

In an embodiment, the specific fluid properties include one or more of a specific fluid medium type, viscosity of the fluid medium, and specific gravity of the fluid medium. This embodiment ensures that key fluid characteristics influencing pump performance are captured for improved monitoring and control.

In an embodiment, the method further comprises generating an alert if the determined properties of the fluid medium satisfy a predetermined criterion. This embodiment supports proactive system monitoring and enables early detection of undesired or unexpected process conditions.

In an embodiment, the predetermined criterion stipulates that a specific fluid type is being transported. This embodiment allows the system to verify and confirm the presence of expected process fluids, enhancing reliability and traceability.

In an embodiment, the predefined power and frequency segments are formed by acquiring frequency and power data during a segmentation phase, acquiring information indicating properties of the fluid being transported during the segmentation phase, forming a segment based on the acquired power and frequency data, and associating the formed segment with the acquired fluid properties. This embodiment provides a structured way to calibrate and define segments based on real, known process conditions, ensuring accuracy in later fluid identification.

In an embodiment, a machine learning model is used to form a segment based on the acquired power and frequency data and/or to associate a formed segment with acquired fluid properties. For example, the model may analyse patterns in historical operational data together with known fluid classifications to learn how different fluid types typically behave in terms of power consumption and frequency ranges. The trained model can then be applied during a segmentation phase to automatically define segment boundaries or to identify which operational patterns correspond to specific fluid types or properties such as viscosity or specific gravity. This embodiment enables a data-driven approach to segmentation, improving accuracy and allowing the system to adapt to changing conditions or novel fluids without manual intervention.

In an embodiment, the data indicating power supplied to the motor driving the pump and frequency of the supplied power is acquired from a frequency converter. This embodiment leverages existing infrastructure and avoids the need for additional sensors or instrumentation, reducing cost and complexity.

In an embodiment, the method further comprises issuing an alert in response to determining that the acquired power and frequency data does not correspond to any of the predefined power and frequency segments. This embodiment enables the detection of unknown or anomalous operating conditions that may indicate system faults or unexpected fluids.

In an embodiment, one or more predefined segments are updated based on newly acquired data indicating power and frequency. This enables refinement of the segmentation over time as more operational data becomes available, improving the alignment between actual pump behaviour and the defined segment boundaries.. This update may be performed periodically, continuously, or in response to detection of significant deviations, thereby enhancing the robustness and adaptability of the fluid identification process.

In a third aspect, a computer program is provided comprising computer-executable instructions for causing a device to perform steps recited in the method of the first aspect when the computer-executable instructions are executed on a processing unit included in the device.

In a fourth aspect, a computer program product is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 schematically shows a perspective view of a prior art centrifugal pump assembly in which embodiments may be implemented;
Figure 2 schematically shows an exploded view of the centrifugal pump assembly of Figure 1;
Figure 3 illustrates a schematic block diagram of a pump implementation according to an embodiment;
Figure 4 illustrates a flowchart of a method of determining properties of a fluid medium transported by the pump of Figure 3 according to an embodiment;
Figures 5a and b illustrates predefined power and frequency segments associated with specific fluid properties according to an embodiment;
Figure 6 illustrates predefined power and frequency segments associated with specific fluid properties according to a further embodiment;
Figure 7 illustrates a flowchart of a method of forming the segments according to an embodiment; and
Figure 8 illustrates a device according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

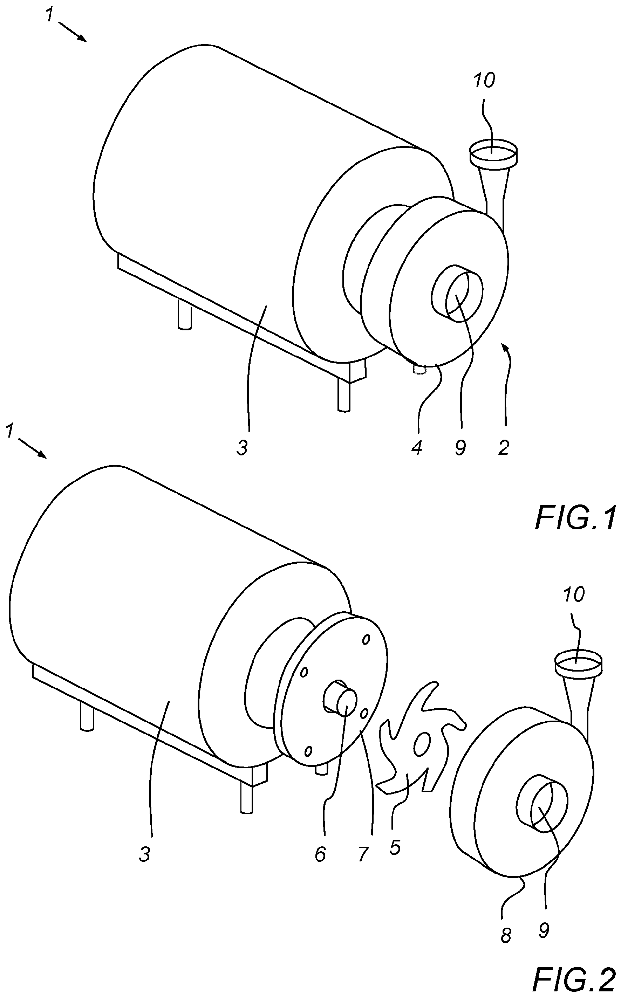

Figure 1 schematically shows a perspective view of a prior art centrifugal pump assembly 1 in which embodiments may be implemented. The centrifugal pump assembly 1 comprises a centrifugal pump 2 operably connected to a motor 3, such as for example an electric motor. Figure 2 schematically shows an exploded view of the centrifugal pump assembly 1 of Figure 1.

The centrifugal pump may include a stationary pump housing 4 accommodating a rotatable impeller 5, wherein the pump housing 4 is composed of at least a stationary rear housing part 7 having a drive shaft opening for receiving the drive shaft 6, and a stationary front housing part 8 directly or indirectly attachable to the rear housing part 7 for forming a pump chamber. Figure 2 also shows that the impeller 5 may be rotationally secured to an axially extending drive shaft 6, which may be operably connected to an output shaft of the motor 3. The pump housing 4 has a fluid inlet opening 9 and a fluid outlet opening 10.

Now, as previously mentioned, for a pump assembly 1 such as that illustrated by way of example in Figures 1 and 2, it is important to know which specific fluid is being pumped as the properties of the fluid affect pump performance parameters such as the flow rate of the fluid being pumped or the pressure applied on the fluid by the pump 2.

If the pump assembly 1, or process equipment connected to the pump assembly 1 to/from which fluid is transported, such as heat exchangers, tanks, cooling towers, evaporators, etc., are not equipped with sensors for measuring e.g. viscosity or gravity, it is not possible to determine these properties of the fluid being pumped. There are rationales for not using sensors, such as attaining cost reductions, avoiding sensor maintenance and potential reliability issues caused by sensor failures, etc. Nevertheless, it may still be necessary to be able to determine fluid medium properties.

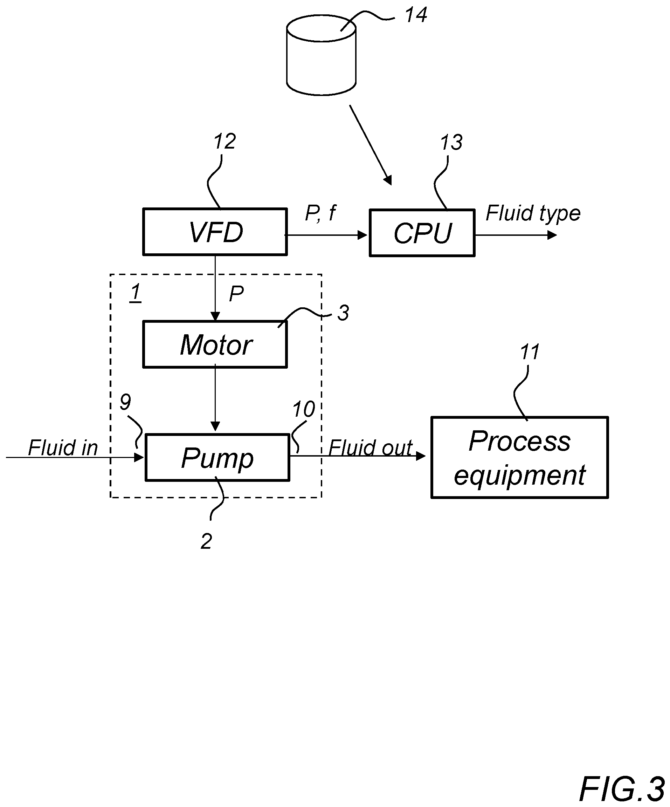

Figure 3 illustrates a schematic block diagram of a pump implementation according to an embodiment.

The pump assembly 1 comprises the motor 3 driving the pump 2 (by rotating the shaft 6 and thus the impeller 5, not shown in Figure 3) to cause transport of a fluid medium entering the pump via inlet 9 and exiting the pump via outlet 10. The transported fluid is then delivered to process equipment 11 such as e.g. a tank. In this example, the process equipment 11 is located downstream of the pump 2 but it may just as well be that process equipment is arranged upstream of the pump (or that process equipment is arranged upstream as well as downstream of the pump 2).

Variable frequency converters, also referred to as variable frequency drives (VFDs), are commonly used for pumps primarily to control the speed of the motor 3 by adjusting the frequency f of the electrical power P supplied to the motor based on process demand. This enables precise flow and pressure regulation.

Thus, further shown in Figure 3 is a VFD 12 for supplying the motor 3 with power P, the frequency f of which is adjusted to control the speed of the motor 3 and hence the speed of the pump 2.. Also shown are a central processing unit (CPU) 13 and a storage device 14 which will be further described in the following. Alternatively, if a VFD 12 is not utilized, it is still possible to measure the power P using a power sensor. In the following exemplifying embodiments, the data indicating the power consumption is acquired from the VFD 12. Further, a sensor may be used to measure the frequency f pump speed, unless the VFD 12 is used.

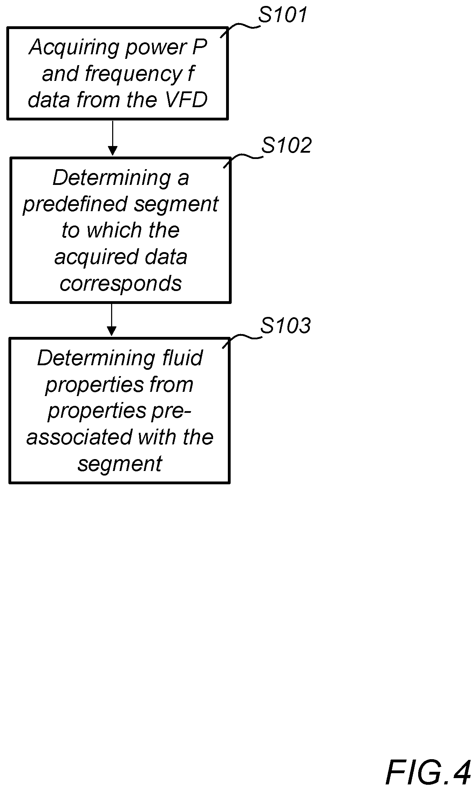

Figure 4 illustrates a flowchart of a method performed by the CPU 13 of determining properties of a fluid medium transported by the pump 2 according to an embodiment.

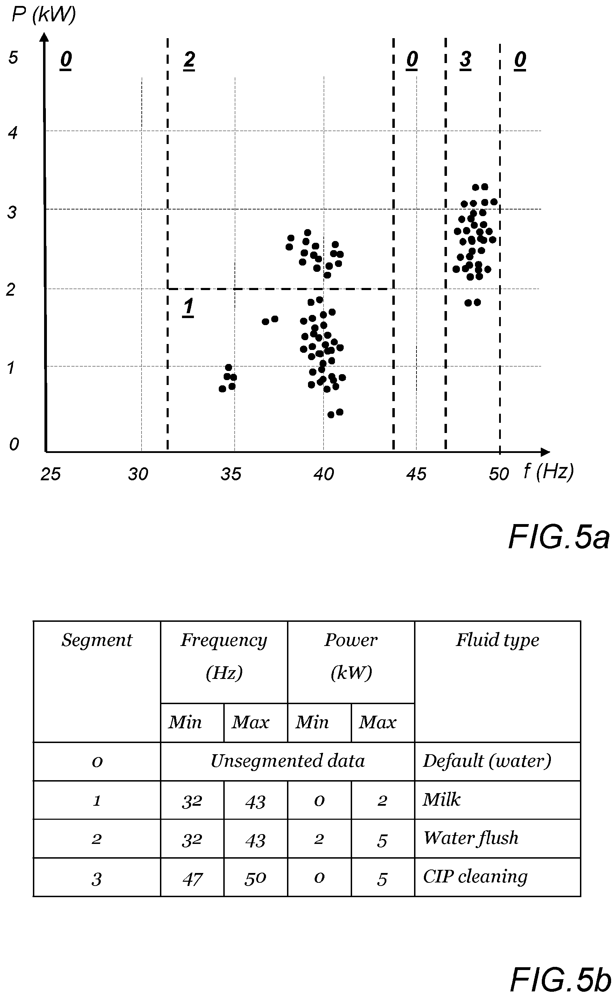

Reference will further be made to Figures 5a and b illustrating a segmentation process for determining the properties of the fluid medium being transported by the pump 2 according to this embodiment. Figure 5a consists of a graph plotting the acquired power P and frequency f of the VFD 12, while Figure 5b shows a table defining the segmentation criteria and corresponding fluid properties, in this example embodied by the specific types of fluids associated with each segment.

Thus, the CPU 13 acquires in S101 data from the VFD 12 supplying power P to the motor 3 that drives the pump 2. The acquired data includes both the power P supplied and the frequency f of the supplied power while the pump 2 is in operation. This data represents an operational state of the pump 2 while transporting a specific fluid.

In step S102, the acquired power and frequency data is processed and analysed by the CPU 13 to determine in which segment the acquired values fall among a predefined number of power and frequency segments - in this example four different segments represented by segments 0-3 each associated with a specific fluid type. In other words, it is determined in S102 to which one of a predefined number of power and frequency segments the acquired data corresponds. These segments are established based on prior testing or historical data, where specific operational conditions have been linked to known fluid properties.

In step S103, the CPU 13 derives the characteristics of the fluid medium being transported based on the fluid properties pre-associated with the identified segment. The pre-association illustrated in the table of Figure 5b is based on previously recorded data from controlled conditions where the fluid type and its properties, such as viscosity and specific gravity, were known. By matching the acquired power and frequency values to a corresponding segment, the system identifies the properties of the current fluid without requiring direct viscosity or density measurements.

As illustrated in the graph of Figure 5a, any acquired frequency and power data falling in a frequency range of 32 to 43 Hz and a power range of 0 to 2 kW is determined to correspond to segment 1. As illustrated in the table, data falling into segment 1 indicates that the fluid being pumped is milk.

Thus, during an initial segmentation phase (which may be conducted during normal operation of the pump 2), power and frequency values of the VFD 12 are registered for creating the segments (the power and frequency values defining boundaries of the segments), and the known fluid type is added to the table, possibly manually by an operator. Hence, different known fluid types are transported through the system while VFD power and frequency values are attained for creating the different segments. Advantageously, this typically only requires a couple of minutes of pump operation for each created segment.

As further can be seen, if the acquired operational data falls into segment 2 (32-43 Hz, 2-5 kW), the system identifies the fluid as water, but where a so-called flush cycle is performed by the pump 2. Water flush is a cleaning or rinsing process being performed where water is pumped through the system to remove residual fluids, contaminants, or buildup. Water flush is commonly used in industrial and food processing applications to clear pipelines, pumps, and equipment between different production runs or before performing a more intensive cleaning cycle, such as a clean-in-place (CIP) process.

Segment 3 represents a frequency range of 47 to 50 Hz and a power range of 0 to 5 kW, corresponding to CIP cleaning.

CIP cleaning is used in industrial processing systems to clean equipment such as pumps, pipelines, tanks, and machinery without requiring disassembly. The CIP cleaning process is commonly applied in the food and beverage, pharmaceutical, and chemical industries to maintain hygiene, prevent contamination, and ensure compliance with safety regulations.

The CIP cleaning process may consist of several steps, for instance beginning with a pre-rinse phase, in which water or a mild flushing solution is pumped through the system to remove loose debris and residual product. Following this, a detergent or chemical cleaning phase may be conducted using alkaline detergents, acidic solutions, or disinfectants to break down fats, proteins, minerals, and other residues that may have accumulated on the internal surfaces of the equipment.

Once the cleaning solution has circulated and effectively loosened contaminants, an intermediate rinse with water may be performed to remove any residual cleaning agents. In some cases, an additional sanitization step is required, where hot water, steam, or chemical sanitizers are introduced to eliminate microorganisms and ensure thorough disinfection. A final step may involve a rinse with water to flush out any remaining chemicals, leaving the equipment clean and ready for the next production cycle. As is understood, this is exemplifying only, and a CIP cleaning process may be conducted in many ways depending on implementation.

As further illustrated in Figures 5a and b, segment 0 includes all unsegmented data and a default fluid may be assigned to segment 0, (typically water). Segment 0 suggests a continuous or regular process where water is the primary fluid being pumped in contrast to the water flush associated with segment 2 suggesting a short-term operation meant to clean or purge the system using water. The operation of the pump 2 during a water flush might involve different flow rates, pressures, or durations compared to normal water transport.

Generally, prior to the segmentation, all data is labelled "segment 0". After successful segmentation, all data (possibly including historic data if the data acquisition has been undertaken before the segmentation) are deployed in defined segments. Under optimal circumstances (which is generally not the case in practice), no data acquired after the segmentation should fall into segment 0. In an embodiment, if the data acquired in S101 does not fall into any segment as determined in S102, thus effectively being associated with segment 0, an alert may be issued to an operator. For instance, it may be that something is wrong, e.g. with the motor 3 consuming too much power or the adjusting frequency f being offset.

In an embodiment, the CPU 13 updates one or more predefined segments based on newly acquired data indicating power and frequency. This enables the CPU 13 to refine the segmentation over time as more operational data becomes available, improving the alignment between actual pump behaviour and the defined segment boundaries. For instance, if a segment originally defined for a specific fluid type no longer accurately reflects the observed power and frequency characteristics during transport of that fluid, the CPU 13 may adjust the segment boundaries accordingly. This update may be performed periodically, continuously, or in response to detection of significant deviations, thereby enhancing the robustness and adaptability of the fluid identification process.

It is understood that the acquired data may consist of real-time current data or previously recorded data from an earlier time period. For example, an operator may wish to review historical data to analyse specific events that occurred within the system. Therefore, the assessment can be performed on either real-time data or previously acquired data, allowing for both immediate system monitoring and retrospective analysis.

Advantageously, by analysing real-time or previously recorded power and frequency values, the CPU 13 can determine which segment the acquired data falls into as illustrated in the graph of Figure 5a. Based on this classification, the fluid properties can be derived from the predefined associations in the table of Figure 5b. This approach allows for the identification of the transported fluid without direct measurement of viscosity or specific gravity, improving monitoring and operational efficiency of the pumping system, and further reduces hardware costs, simplifies maintenance, and enhances both real-time and historical system diagnostics.

The described method and system provide several advantages. These include improved fluid property estimation without requiring dedicated viscosity or density sensors, better accuracy of pump performance predictions, and the ability to identify fluid types under varying operational conditions using only existing pump data. This approach reduces hardware costs, simplifies maintenance, and enhances both real-time and historical system diagnostics.

As an example, in a dairy processing facility, the described method can be used to verify in real-time whether milk, water, or cleaning fluid is currently flowing through a shared pump line. This improves cleaning validation, reduces cross-contamination risk, and ensures compliance with food safety protocols without the need for inline fluid-specific sensors

In an embodiment, the power and frequency data acquired in S101 from the VFD 12 is considered to correspond to a predefined segment if a sufficient number of acquired data values fall within the power and frequency boundaries defining that segment, rather than requiring all acquired values to match exactly. This approach accounts for variability in real-world operating conditions, such as fluctuations in power and frequency due to system dynamics, minor inconsistencies in data readings, or transient operating states.

Thus, rather than requiring that all acquired power and frequency values correspond to a single predefined segment, this embodiment determines the properties of the transported fluid based on whether a sufficient number of acquired data values fall within the power and frequency boundaries of a given segment. This ensures robust classification while allowing for natural operational variations. This may be determined by considering a ratio between the number of acquired data values falling within power and frequency boundaries defining the segment and a total number of acquired data values, and that such ratio should be sufficiently high.

For instance, if a sufficient number of the acquired values - determined based on a predefined threshold, such as e.g. 90 out of 100 acquired values - fall within Segment 1 (32-43 Hz, 0-2 kW), the CPU 13 may still conclude that the fluid being transported is milk, even if some data points marginally deviate due to transient variations. Similarly, if the number of acquired data values falling within Segment 2 (32-43 Hz, 2-5 kW) exceeds the threshold, the system may reliably infer that a water flush operation is in progress, without requiring absolute consistency across all readings.

This embodiment enhances the flexibility and adaptability of the system, ensuring that occasional deviations or noise in acquired data do not lead to incorrect fluid identification. The threshold for determining a match may be set as a fixed predefined value or dynamically adjusted based on system requirements, historical data, or real-time conditions. In some implementations, statistical models or machine learning algorithms may be used to refine the threshold, improving classification accuracy and adapting to variations in the pump's operating environment.

In an embodiment, one or more predefined segments may be updated based on newly acquired operational data. This allows the CPU 13 to adapt the segment definitions over time as more data is collected during regular operation. For instance, if changes in process conditions or fluid characteristics occur, the CPU 13 may refine the frequency and power boundaries of a given segment to maintain classification accuracy. The update may be triggered manually by an operator or automatically based on detection of consistent deviations, enabling continuous improvement of fluid identification and system responsiveness.

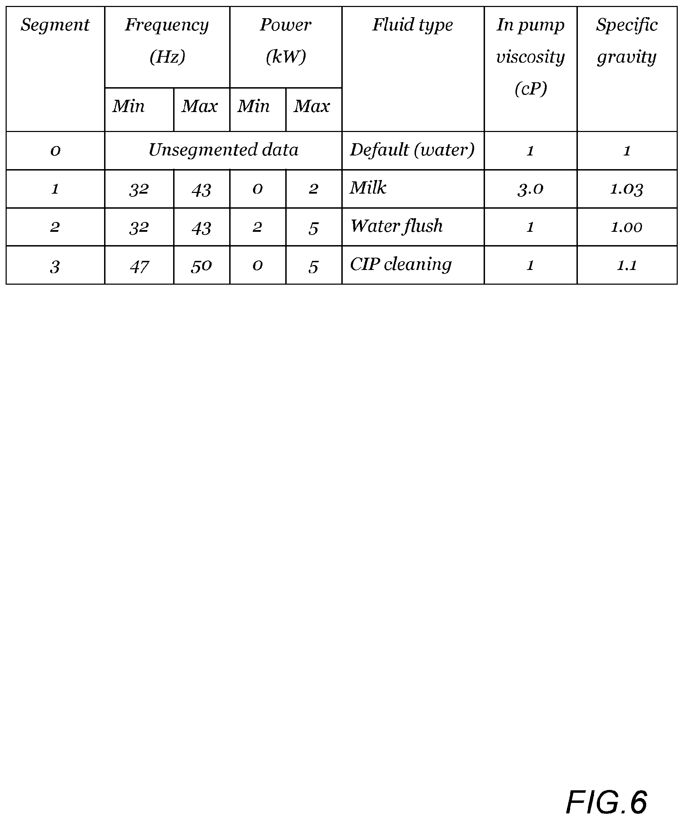

Figure 6 presents an updated version of the segmentation table previously shown in Figure 5b, now including two additional columns that specify viscosity and specific gravity for each predefined segment. These added columns provide more detailed fluid characterization, enhancing the accuracy of fluid property determination based on acquired power and frequency data.

These are typically added to the table during the establishing of the segments, where specific operational conditions can be linked to known fluid properties.

The first additional column lists the viscosity of the fluid associated with each predefined segment, measured in e.g. centipoise (cP). Viscosity represents the resistance of the fluid to flow and significantly affects pump performance, including power consumption, flow rate, pressure and efficiency. For example, milk may have a viscosity of approximately 3.0 cP, whereas water, which is used in a flush or CIP cleaning cycle, typically has a viscosity of 1.0 cP. The inclusion of viscosity values allows the system to account for fluid resistance effects when analysing pump operation and estimating flow characteristics. While the table of Figure 6 include "Fluid type", it may alternatively be that only viscosity and/or gravity is included for defining the fluid. Hence, in some implementations, it may not be necessary to know the specific type of fluid being transported if instead viscosity and/or gravity is listed.

The second additional column lists the specific gravity (SG) of each fluid type, which is the ratio of the fluid's density to the density of water at a reference temperature, such as e.g. 4°C. Specific gravity is a dimensionless value that influences pump power requirements, as fluids with higher specific gravity require more energy to pump. For example, milk has a slightly higher specific gravity of approximately 1.03 compared to water, whereas cleaning solutions used in CIP processes may have a specific gravity that varies depending on their chemical composition, in this particular example 1.1. By incorporating specific gravity values, the system can improve pump performance calculations, including estimating power demand, net positive suction head available (NPSHₐ), and flow behaviour.

By explicitly storing viscosity and specific gravity values for each segment, the CPU 13 is allowed to enhance its ability to differentiate between similar fluids based on physical properties. Additionally, the inclusion of these fluid parameters enables more precise energy consumption estimates and allows for better adaptation to different fluid conditions. Operators can also use these parameters to adjust system settings dynamically, ensuring that pumping conditions are optimized for the specific fluid being transported.

Integration of viscosity and specific gravity into the segmentation table, as illustrated in Figure 6, achieves greater precision in terms of fluid classification and pump performance estimation, thereby allowing for more effective monitoring and process operation.

With reference to the tables of Figures 5b and 6 illustrating the predefined segments with pre-associated fluid types and/or other properties such as viscosity and specific gravity, creation of the segments according to an embodiment will be described.

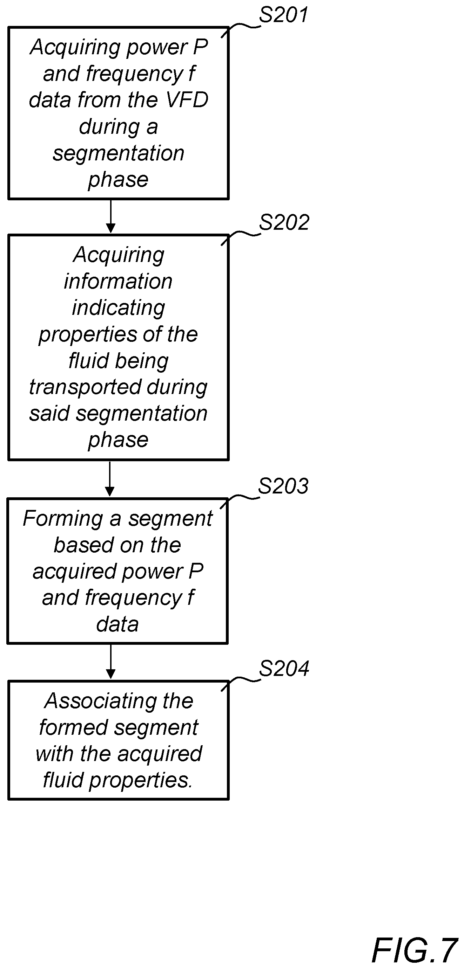

Figure 7 shows a flowchart illustrating the initial forming of the segments according to this embodiment.

The segmentation process may be performed by correlating acquired operational data from the VFD 12 with externally logged production data to determine the properties of the transported fluid. This may be achieved by integrating two or more distinct data sources.

The first data source consists of operational data obtained from the VFD 12, which supplies power to the pump motor 3. This data source provides a continuous stream of real-time measurements of power consumption and frequency, sampled at selected intervals. Each recorded data entry may be associated with a timestamp, enabling synchronization with other process records. Thus, in a first step S201, the CPU 13 acquires frequency and power data from VFD during a selected time period.

The second data source may consist of production logs or external records, such as process documentation, tracking systems, sensor data or manually entered data that provide information about the fluid type being pumped at said selected time period. These records may be stored and indicate the nature of the fluid being processed at a given time. In other words, the CPU 13 acquires information in S202 indicating properties of the fluid being transported during said selected time period.

For instance, upon performing initial segmentation, a temperature sensor measuring fluid temperature can help an operator (possibly using artificial intelligence) to detect fluid type: Assuming that temperature > 90°C, the operator can conclude that a CIP is being performed, and if the temperature is in the range of 0-8°C, then milk is likely being transported, while a temperature range of 15- 25°C indicates an ongoing water flush.

In S203, the CPU 13 forms the segment based on the acquired power and frequency data, for instance by setting the boundaries of the formed segment in accordance with minimum and maximum values of the acquired frequency and power data.

Finally, in S204, the CPU 13 associates the formed segment with the acquired fluid properties.

For example, if a recorded operational data entry at 11:00 AM shows a frequency of 40 Hz and power consumption of 1.6 kW, and the production log for the same time period indicates that the system was transporting milk, this data entry is assigned to the segment associated with milk. Similarly, operational data recorded between e.g. 12:15 PM and 1:55 PM having a frequency of 48 Hz and power consumption of 2.6 kW may be assigned to the segment corresponding to CIP cleaning, as indicated by the production log, while operational data recorded at e.g. 3:15 PM having a frequency of 41 Hz and power consumption of 2.7 kW may be assigned to the segment corresponding to water flush.

By combining real-time operational data with historical production records represented by the segments illustrated in Figures 5a, 5b and 6, the system ensures accurate fluid identification without requiring dedicated viscosity or density sensors. This approach enhances instant system monitoring and also allows for retrospective analysis of pump performance for specific fluids, enabling improved process operation and maintenance planning.

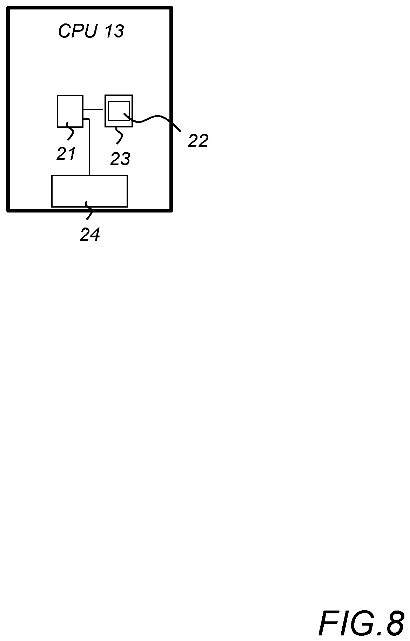

Figure 8 illustrates a device 13 configured to determine operating point of a pump according to an embodiment. The steps of the method performed by the device 13 are in practice performed by a processing unit 21 embodied in the form of one or more microprocessors arranged to execute a computer program 22 downloaded to a storage medium 23 associated with the microprocessor, such as a Random Access Memory (RAM), a Flash memory or a hard disk drive. The processing unit 21 is arranged to cause the device 13 to carry out the method according to embodiments when the appropriate computer program 22 comprising computer-executable instructions is downloaded to the storage medium 23 and executed by the processing unit 21. The storage medium 23 may also be a computer program product comprising the computer program 22. Alternatively, the computer program 22 may be transferred to the storage medium 23 by means of a suitable computer program product, such as a Digital Versatile Disc (DVD) or a memory stick. As a further alternative, the computer program 22 may be downloaded to the storage medium 23 over a network. The processing unit 21 may alternatively be embodied in the form of a digital signal processor (DSP), an application specific integrated circuit (ASIC), a field-programmable gate array (FPGA), a complex programmable logic device (CPLD), etc. The device 13 further comprises a communication interface 24 (wired or wireless) over which it is configured to transmit and receive data.

Machine learning models may be trained on historical pump operation data to automatically classify fluid types or refine segment boundaries. Such models may use supervised learning during the segmentation phase and unsupervised learning during subsequent live monitoring to detect anomalies or novel fluid behaviour.

In an embodiment, a machine learning model may be used to form a segment based on the acquired power and frequency data and/or to associate a formed segment with acquired fluid properties. For example, the model may analyse patterns in historical operational data together with known fluid classifications to learn how different fluid types typically behave in terms of power consumption and frequency ranges. The trained model can then be applied during a segmentation phase to automatically define segment boundaries or to identify which operational patterns correspond to specific fluid types or properties such as viscosity or specific gravity. This embodiment enables a data-driven approach to segmentation, improving accuracy and allowing the system to adapt to changing conditions or novel fluids without manual intervention.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A method of a device (13) for determining properties of a fluid medium transported by a pump (2), comprising:
acquiring (S101) data indicating power (P) supplied to a motor (3) driving the pump (2) and frequency (f) of the supplied power;
determining (S102) to which one of a plurality of predefined power and frequency segments the acquired power and frequency data corresponds, wherein each segment is pre-associated with specific fluid properties; and
determining (S103) the properties of the fluid medium based on the pre-associated fluid properties of the segment to which the acquired power and frequency data corresponds.

2. The method of claim 1, wherein the acquired power and frequency data is considered to correspond to a predefined segment if a ratio between a number of acquired data values falling within power and frequency boundaries defining the segment and a total number of acquired data values is sufficiently high.

3. The method of claim 2, wherein the ratio is considered to be sufficiently high if the ratio exceeds a set threshold value.

4. The method of claim 3, wherein the threshold value is dynamically adjustable based on historical operational data or real-time measurements.

5. The method of any one of the preceding claims, wherein said specific fluid properties includes one or more of specific fluid medium type, viscosity of said fluid medium and specific gravity of said fluid medium.

6. The method of any one of the preceding claims, further comprising generating an alert if the determined (S103) properties of the fluid medium comply with a predetermined criterion.

7. The method of claim 6, wherein the predetermined criterion stipulates that a specific fluid type is being transported.

8. The method of any one of the previous claims, wherein the predefined power and frequency segments are formed by:
acquiring (S201) frequency and power data during a segmentation phase;
acquiring (S202) information indicating properties of the fluid being transported during said segmentation phase;
forming (S203) a segment based on the acquired power and frequency data; and
associating (S204) the formed segment with the acquired fluid properties.

9. The method of any one of claim 8, wherein a machine learning model is used to form a segment based on the acquired power and frequency and/or associate a formed segment with acquired fluid properties.

10. The method of any one of the preceding claims, wherein the data indicating power (P) supplied to the motor (3) driving the pump (2) and frequency (f) of the supplied power is acquired from a frequency converter (12).

11. The method of any one of the preceding claims, further comprising issuing an alert in response to determining (S102) that the acquired power and frequency data does not correspond to any of the predefined power and frequency segments.

12. The method of any one of the preceding claims, further comprising updating one or more predefined segments based on newly acquired data indicating power (P) and frequency (f).

13. A computer program (22) comprising computer-executable instructions for causing the device (13) to perform steps recited in any one of claims 1-12 when the computer-executable instructions are executed on a processing unit (21) included in the device (13).

14. A computer program product comprising a computer readable medium (23), the computer readable medium having the computer program (22) according to claim 13 embodied thereon.

15. A device (13) configured to determine properties of a fluid medium transported by a pump (2), the device being operative to:
acquire (S101) data indicating power (P) supplied to a motor (3) driving the pump (2) and frequency (f) of the supplied power;
determine (S102) to which one of a plurality of predefined power and frequency segments the acquired power and frequency data corresponds, wherein each segment is pre-associated with specific fluid properties; and to
determine (S103) the properties of the fluid medium based on the pre-associated fluid properties of the segment to which the acquired power and frequency data corresponds.
